(19) Europäisches Patentamt
European Patent Office
Office européen des brevets

(11) Numéro de publication: **0 155 872**
**A1**

(12) **DEMANDE DE BREVET EUROPEEN**

(21) Numéro de dépôt: **85400323.3**

(22) Date de dépôt: **21.02.85**

(51) Int. Cl.[4]: **A 01 N 41/06**
A 01 N 43/40, A 01 N 43/54

(30) Priorité: **21.02.84 FR 8402582**

(43) Date de publication de la demande:
**25.09.85 Bulletin 85/39**

(84) Etats contractants désignés:
**AT BE CH DE FR GB IT LI LU NL SE**

(71) Demandeur: **Etablissement Public dit: CENTRE NATIONAL DE LA RECHERCHE SCIENTIFIQUE (CNRS)**
**15, Quai Anatole France**
**F-75007 Paris(FR)**

(72) Inventeur: **Boudet, Alain**
**18, rue Caubere**
**F-31400 Toulouse(FR)**

(72) Inventeur: **Cazaux, Louis**
**Vigoulet-Auzil**
**F-31320 Castanet-Tolosan(FR)**

(72) Inventeur: **Gorrichon, Liliane**
**20 rue des Cèdres**
**F-31400 Toulouse(FR)**

(72) Inventeur: **Grand, Claude**
**6, Impasse Dordac**
**F-31650 Saint-Orens de Gameville(FR)**

(74) Mandataire: **Peaucelle, Chantal et al,**
**Cabinet Plasseraud 84, rue d'Amsterdam**
**F-75009 Paris(FR)**

(54) **Procédé de réduction du taux de lignine dans les végétaux et nouvelles compositions pour sa mise en oeuvre.**

(57) Les composés de formule I:

```
Ar–NH–A–C(H)R1–C–OR
                ‖
                O
```

dans laquelle Ar représente un cycle aromatique éventuellement substitué, *A* représente un groupe

```
            O
            ‖
–S–  ou  –S ,
 ‖          ‖
 O          O
```

$R_1$ un alcoyle et *R* un alcoyle ou un atome d'hydrogène, sont utiles pour réduire le taux de lignine dans les végétaux.

EP 0 155 872 A1

Croydon Printing Company Ltd.

L'invention est relative à un procédé de réduction du taux de lignines dans les végétaux et à de nouvelles compositions utilisables pour la mise en oeuvre de ce procédé.

Les lignines sont des polymères phénoliques élaborés par les végétaux, formés de motifs monomères de trois types, à savoir d'alcools p-coumarylique, coniférylique et sinapylique.

La biosynthèse de ces motifs monomères est réalisée dans la plante, à partir de phénylalanine selon un processus comportant plusieurs étapes dans lesquelles interviennent de nombreuses enzymes.

Les deux dernières étapes de la biosynthèse des monomères, qui sont spécifiques de la lignification, correspondent à des étapes de réduction et sont catalysées respectivement par la cinnamoyl :CoA réductase (désignée ci-après par CCR) et l'alcool cinnamylique déshydrogénase (désignée par CAD).

La teneur en lignines et les proportions relatives des trois monomères ainsi que leur mode de liaison sont variables d'une espèce à l'autre et selon l'âge et la nature du tissu et des cellules considérées.

D'une manière générale, les lignines sont synthétisées dans les parois des cellules telles que le xylème et le sclérenchyme, assurant par là des fonctions importantes de soutien et de conduction.

Elles constituent cependant un obstacle à l'utilisation optimale des végétaux dans divers domaines.

Ainsi, dans la nutrition animale, on constate que des taux de lignine importants, par exemple, dans les plantes fourragères, nuisent à la digestibilité des plantes par les animaux.

En outre, on observe dans certaines productions végétales une lignification intense, après la récolte, qui les rend rapidement impropres à la consommation.

Ainsi, des tubercules tropicaux tels que les ignames, utilisés pour l' alimentation humaine, ne peuvent plus être consommés au bout de quelques semaines après leur récolte en raison d'une nouvelle synthèse de parois secondaires lignifiées.

De plus, dans certaines plantes, par exemple, chez les plants de tomates, on constate un antagonisme entre la production de lignines et la croissance de la plante , une lignification rapide réduisant les possibilités de croissance cellulaire.

Diverses solutions ont été alors recherchées pour réduire les taux de lignines.

Par mutagénèse, ou par croisement, on a pu ainsi obtenir une hypolignification des plantes fourragères conduisant à une meilleure ingestibilité et digestibilité par les animaux. Toutefois, leur faible productivité industrielle ne permet pas une exploitation de telles variétés.

On a également proposé d'inhiber spécifiquement, par voie chimique, des enzymes impliquées dans la biosynthèse des lignines.

Ainsi, différents inhibiteurs de la phénylalanine ammonia lyase ou PAL, enzyme qui intervient dans le premier stade de synthèse de la lignine conduisant à des acides cinnamiques, ont été élaborés. L'inhibiteur le plus efficace décrit à cet égard, à savoir l'acide D,L-$\alpha$-aminoxy-$\beta$-phényl-propionique permet effectivement une réduction de la synthèse des lignines, mais son action in vivo se traduit également par un effet inhibiteur vis-à-vis notamment de la synthèse des phénols simples et des flavonoïdes. Cet acide inhibe également les

enzymes à pyridoxal phosphates qui interviennent dans différentes voies métaboliques et, en particulier dans la synthèse de l'éthylène.

Il s'est avéré également que le traitement de cultures de tabac par cet inhibiteur entraîne en même temps qu'une baisse de taux de lignine, une réduction d'environ 30% des phénols totaux.

On conçoit l'intérêt de disposer d'inhibiteurs spécifiques vis-à-vis de la synthèse des lignines afin de ne pas perturber le métabolisme général de la plante.

Or, les inventeurs ont constaté qu'il était possible, sans altérer de manière significative les fonctions métaboliques essentielles de la plante, d'obtenir une réduction de la teneur en lignine en utilisant une famille déterminée de dérivés chimiques agissant spécifiquement sur les enzymes de réduction CCR ou CAD mentionnées ci-dessus.

L'invention a donc pour but de fournir un nouveau procédé pour la réduction du taux de lignines dans les végétaux permettant d'abaisser la teneur en lignines d'au moins 40% sans modifier de manière significative les fonctions essentielles de la plante.

Elle a également pour but de fournir une famille d'inhibiteurs de synthèse des lignines dont l'utilisation permet notamment d'améliorer la digestibilité des végétaux destinés à l'alimentation humaine et animale et leur conservation.

Le procédé de réduction du taux de lignines de végétaux selon l'invention est caractérisé en ce qu'on met en oeuvre au moins un dérivé de formule I

$$Ar-NH-A-C(H)R_1-\underset{\underset{O}{\|}}{C}-OR$$

dans laquelle

- Ar représente au moins un cycle aromatique

en particulier, un groupe phényle ou un hétérocycle, en particulier un hétérocycle azoté tel qu'un radical pyridyle ou pyrimidinyle, le groupe aromatique ou hétérocyclique étant, le cas échéant, substitué par au moins un radical Z en position ortho, méta ou para, choisi de préférence parmi le groupe -OH, alcoxy renfermant notamment de 1 à 4 atomes de carbone $-NO_2$, $-NH_2$, NH(alc.ouAr.), $N-(alc_2)$, alc. représentant un groupe alcoyle, notamment, de 1 à 4 atomes de carbone, et Ar représentant un radical aromatique tel qu'un groupe phényle,

- A représente un groupe $-\underset{\underset{O}{\|}}{S}-$ ou $-\overset{\overset{O}{\|}}{\underset{\underset{O}{\|}}{S}}-$

- $R_1$ représente un radical alcoyle, en particulier, méthyle ou éthyle, ou un atome d'hydrogène, et

- R représente un radical alcoyle linéaire ou ramifié, de préférence de 1 à 4 atomes de carbone, ou un atome d'hydrogène.

D'une manière surprenante, les dérivés répondant à ce type de structure, à savoir, comportant (1) un noyau aromatique, (2) une fonction sulfinamoyle (-NH-SO-) ou sulfamoyle ($-NH-SO_2$), et, conjointement (3) un groupement carbonyle en β du groupe >S=O ou $-\overset{\overset{O}{\|}}{\underset{\underset{O}{\|}}{S}}-$, ainsi qu'au moins (4) un atome d'hydrogène libre sur le groupe carboné entre A et -C=O, possèdent in vivo une action spécifique élevée vis-à-vis de la synthèse de lignine et n'affectent pas de manière significative le métabolisme général de la plante traitée.

On peut considérer que ces composés se comportent comme des inhibiteurs appelés communément inhibiteurs suicides c'est-à-dire qu'ils possèdent une structure voisine du substrat physiologique de l'enzyme avec une fonction réactive masquée qui est libérée au voisinage du site catalytique et se lie irréversiblement à des groupements indispensables à la catalyse enzymatique.

Un groupe préféré d'inhibiteurs, selon l'invention comprend au moins un dérivé de sulfinamoyle de formule I ci-dessus dans laquelle A représente le groupe $>S=O$.

Ce groupe comprend des dérivés de formule II :

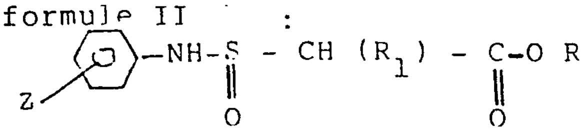

(II)

dans laquelle Z, $R_1$ et R présentent les significations données ci-dessus.

Des dérivés particulièrement avantageux en raison de leur efficacité inhibitrice de lignine supérieure in vivo par rapport aux effets observés in vitro, correspondent aux produits de formule II dans laquelle Z représente un substituant en position ortho, en particulier, un groupe -OH ou $-NH_2$.

Des résultats particulièrement satisfaisants in vivo sont obtenus avec les dérivés de formule II ci-dessus dans laquelle Z représente un substituant en position ortho, de préférence un groupe -OH ou $-NH_2$, et R représente un atome d'hydrogène.

D'autres composés actifs comprennent, comme substituant Z, un groupe $NO_2$, en particulier en position para et éventuellement un autre groupe de substitution notamment un groupe -OH en position ortho.

Le groupe préféré considéré de formule II comprend également des dérivés de formule IIA ou IIB

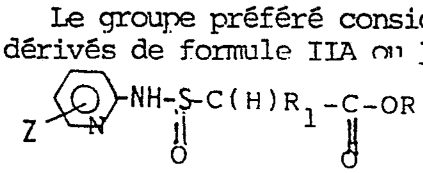 (IIA) ou 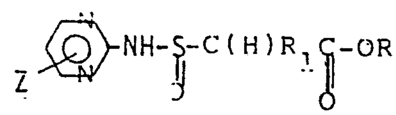 (IIB)

dans lesquelles les substituants Z, $R_1$ et R présentent avantageusement des significations préférées indiquées en rapport avec la formule II.

Les inhibiteurs mis en oeuvre dans l'invention, dans un autre groupe préféré, comprennent au moins un dérivé de sulfamoyle de formule III :

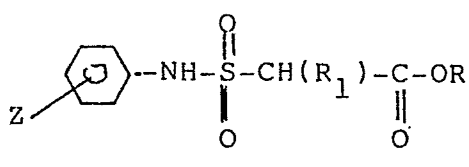 (III)

Les dérivés de ce groupe dans lesquels Z occupe une position ortho sont plus spécialement préférés , notamment

ceux dans lesquels au moins un substituant Z représente un groupe $-OH$, $-NH_2$ ou $-NO_2$, notamment selon les significations préférées ci-dessus données pour les dérivés de formule II.

Dans d'autres dérivés de ce groupe, les produits répondant aux formules IIIA et IIIB

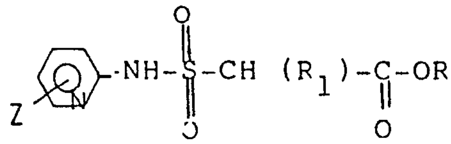
(IIIA)

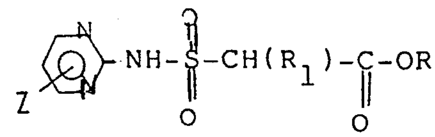
(IIIB)

permettent d'obtenir une réduction efficace du taux de (ce terme étant utilisé d'une manière générale pour désigner les lignines).

De manière surprenante, l'étude in vivo de l'action de ces inhibiteurs sur diverses espèces végétales a montré une augmentation de leur effet inhibiteur par rapport aux essais réalisés in vitro et ce sans altération significative du métabolisme primaire de la plante.

Les travaux effectués par les inventeurs ont également montré que ces inhibiteurs sont aisément absorbables par la plante et transportés ainsi avantageusement par la plante jusqu'aux sites de synthèse de lignine.

L'utilisation de ces inhibiteurs selon des concentrations pouvant être aussi faibles que 50 µM permet d'obtenir les résultats souhaités.

Des concentrations de 50 à 100 µM sont habituellement suffisantes pour inhiber la formation de lignine.

L'invention vise donc des compositions pour la réduction du taux de lignine dans les végétaux comprenant une quantité efficace d'au moins un dérivé de formule I ci-dessus.

Ces compositions d'inhibiteurs, selon l'invention, se présentent avantageusement sous forme de poudre à diluer au moment de l'emploi, ou de solutions, de préférence de solutions aqueuses renfermant ces inhibiteurs.

Les préparations sous forme de solutions auqeuses renferment avantageusement les inhibiteurs en question à raison d'au moins 50µM. Des préparations préférées renferment de 50 à 200 µM, avantageusement de 50 à 100 µM.

Ces préparations peuvent, en outre, renfermer d'autres ingrédients utiles à la plante, notamment, des éléments nutritifs et/ou des agents de traitement.

L'application est réalisée de préférence dans la phase ou les phases de lignification intense du végétal. On opère par pulvérisations, arrosage ou autre mode approprié au type de végétal traité.

Une pulvérisation, tous les deux à trois jours, sur la production végétale au moment de la phase de croissance du végétal, permet de réduire le taux de lignine de manière satisfaisante. Ce traitement est utilisable sur des espèces végétales variées telles que, par exemple, le peuplier, le maïs, les plantes à tubercules et autres productions végétales.

Dans le cas de plantes fourragères, il en résulte une ingestibilité et une digestibilité accrues de ces dernières par les ruminants, permettant ainsi une augmentation de la productivité.

Le procédé de l'invention revêt également un intérêt essentiel dans l'alimentation humaine en permettant de réduire le taux de lignines dans les productions végétales comme évoqué ci-dessus. Une pulvérisation

au moment du stockage des végétaux s'avère généralement suffisante.

Les produits mis en oeuvre selon l'invention sont avantageusement préparés selon le procédé décrit par De BLIC et al dans Synthesis.1982,No 4.

D'autres caractéristiques et avantages de l'invention apparaîtront dans les exemples qui suivent donnés à titre illustratif.

Exemple 1 : Préparation de N-sulfinylamines de formule $ArN = S = O$ avec Ar représentant un groupe phényle,o-m-ou p-hydroxyphényle,o-aminophényle ou p-hydroxy m-méthoxyphényle.

Ces dérivés sont préparés par réaction d'une amine primaire avec du chlorure de thionyle selon le schéma réactionnel suivant :

$$ArNH_2 + SOCl_2 \longrightarrow ArN = S = O + 2HCl$$

Ces réactions sont réalisées comme suit :

. a) réaction d'une amine primaire avec le chlorure de thionyle :

On porte à reflux pendant 4 heures (Ar = 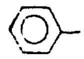 ) ou une nuit ( Ar = 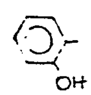 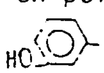 , 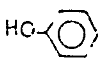 , 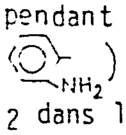 ) 0,1 mole d'amine correspondante avec 0,15 mole de $SOCl_2$ dans 100 ml de benzène anhydre ($R_1$ = 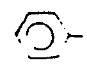 ) ou 50 ml d'éther et 100 ml de benzène pour les autres composés. Après évaporation du solvant, on procède à une distillation sous pression réduite ( Ar = 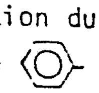 49°C/2,4 mm Hg, Ar = 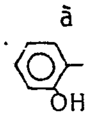 70°C/5.$10^{-3}$ mm Hg)

Les rendements respectifs pour les différents produits sont de 80,50,65,60, 55 et 60 %.

Les spectres RMN (dans $CDCl_3$) et IR (dans $CHCl_3$) de ces dérivés confirment les structures attendues.

<u>Exemple 2</u> : Préparation de sulfinamoyl acétates de tert-butyle de formule 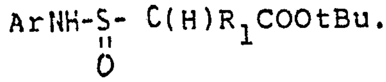

On prépare les acétates suivants

| composé | 1 | 2 | 3 | 4 | 5 | 6 | 15 | 17 |
|---|---|---|---|---|---|---|---|---|
| Ar | 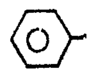 | 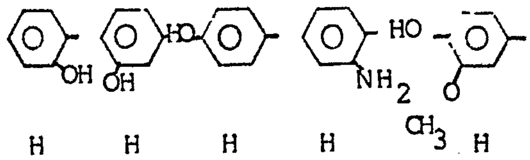 | | | | | 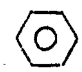 | 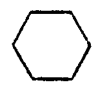 |
| $R_1$ | H | H | H | H | H | H | $CH_3$ | H |

On opère selon les deux étapes <u>a</u> et <u>b</u> suivantes :

a) - préparation des dérivés organométalliques, par exemple, bromozinciques à partir des esters correspondants.

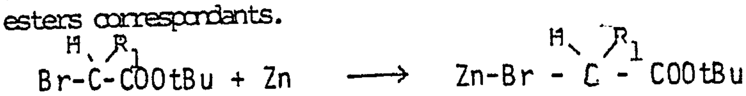

b) - action du dérivé ArN=S=O déjà formé sur le dérivé bromozincique correspondant

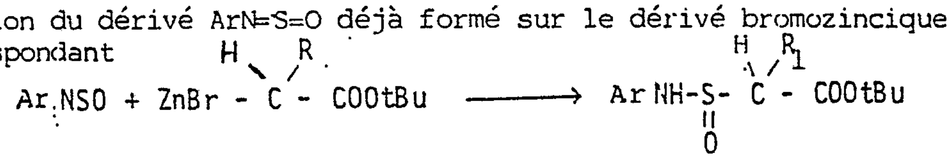

On porte à reflux, dans 70 ml de diméthoxyméthane (méthylal), 0,069 mole de bromoacétate de tert-butyle ou de bromo-2 isobutyrate de tert-butyle et 0,077 mole de zinc en copeaux activés par quelques cristaux d'iode. Après ½ heure de chauffage, le milieu réactionnel devient trouble. On laisse encore

4 heures à reflux. Le rendement est de l'ordre de 90%. On porte ensuite le mélange à 0°C et, sous agitation magnétique, on verse goutte à goutte une solution de ArN=S=O dans le méthylal (pour Ar = phényle) on met 0,06 mole, dans les autres cas on met 0,03 mole de ArNSO). Après la fin de l'addition, on laisse la réaction pendant 30 mn. à 0°C, puis on hydrolyse par une solution aqueuse de $NH_4Cl$ à 20%, à la même température. Après extraction à l'éther et évaporation, on obtient les sulfinamoyl esters correspondants. Les composés 1 et 5 ont été purifiés par recristallisations successives dans un mélange éther-éther de pétrole (50:50) tandis que les autres composés ont été purifiés par chromatographie liquide (HPLC). On a commencé l'élution par un mélange éther-étherde pétrole (20:80) et on est arrivé jusqu'à 100% d'éther. Les deux dernières élutions ont été faites par un mélange acétate d'éthyle-éther (25:75). Les rendements dans tous les cas sont de l'ordre de 55-65%. On indique ci-après les rendements et les points de fusion des dérivés obtenus.

| composés | 1 | 2 | 3 | 4 | 5 | 6 | 15 | 17 |
|---|---|---|---|---|---|---|---|---|
| Rdt (%) | 65 | 57 | 55 | 55 | 60 | 65 | 60 | 61 |
| F (°C) | 102 | 118 | 100 | 136 | 87 | 105 | 122 | 67 |

Les spectres RMN et IR de ces composés confirment les structures attendues.

EXEMPLE 3 - Préparation du sulfinamoyl acétate de tertio-butyle de formule :

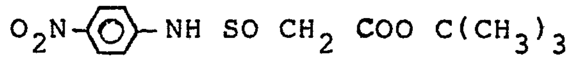

Dans une étape a, on fait réagir du chlorure de thionyle avec de la p-nitroaniline, puis dans une étape b, on condense le produit obtenu avec un dérivé zincique d'acétate de tertio-butyle.

Ces étapes a et b correspondent aux schémas réactionnels suivants :

Etape a : 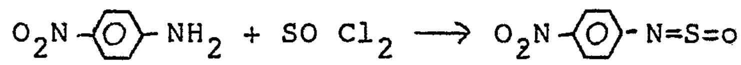

Etape b : 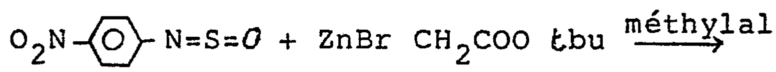


(Dans ces formules, +bu représente un groupe tertiobutyle.

On dissout 0,047 mole de p-nitroaniline dans 60 ml de benzène (pas totalement dissous) et on verse goutte à goutte 5,5 ml (0,075 mole) de $SOCl_2$ dans 25 ml de $C_6H_6$ sous agitation et à 0°C. A la fin de l'introduction, on verse encore 30 ml de benzène, on laisse sous agitation à température ambiante pendant 30 minutes et on porte à reflux pendant 4 heures. La solution devient jaune-rouge et claire.

On soumet le mélange à évaporation, puis on refroidit, ce qui permet d'obtenir un solide jaune.

L'analyse RMN et IR confirment la structure attendue.

P.F. 71°C. Rendement 94 %.

On prépare le dérivé zincique comme indiqué ci-dessus, mais en utilisant 0,016 mole de $BrCH_2COO$+bu et 0,02 mole de zinc dans 30 ml de méthylal. Après formation du dérivé zincique, on ajoute goutte à goutte à température ambiante 2 g (0,0109 mole) du du·produit nitré obtenu dans l'étape a, dans 30 ml de méthylal. On laisse sous

agitation pendant 20 minutes et on hydrolyse par $NH_4Cl$ 20 % (50 ml). Après extraction, séchage ou $MgSO_4$ et évaporation, on obtient 1,1 g de produit brut marron. Après des lavages successifs à l'éther, on récupère 0,9 g de produit jaune sous forme de cristaux.

P.F. 129°C, Rendement 35 %.

L'analyse RMN confirme la structure attendue.

EXEMPLE 4 - Préparation du sulfinamoyl acétate de tertio-butyle de formule :

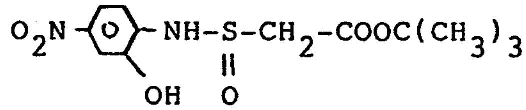

On opère selon les étapes a et b indiquées dans l'exemple 3, correspondant au schéma réactionnel suivant :

Etape a : 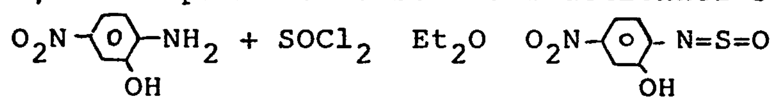


Etape b : 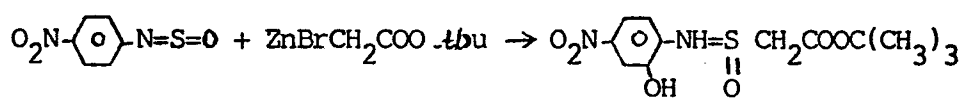


Etape a.

On dissout 10 g de p-nitro, o-hydroxy, aniline dans 160 ml d'éther. On ajoute rapidement goutte à goutte 5,4 ml de $SOCl_2$ dans 15 ml d'éther et on porte à reflux environ 14 heures. Après filtration et évaporation, on récupère un produit solide de PF 135°C, rendement 59 %.

Etape b.

On mélange 3,2 g de $BrCH_2$ COO+bu et 1,3 g de Zn dans 50 ml de méthylal. Une fois le dérivé zincique formé, on verse à température ambiante goutte à goutte 1 g du produit obtenu à l'étape a dans 25 ml de méthylal. Au bout de 20 minutes, on hydrolyse à l'aide de $NH_4Cl$, et on procède comme décrit ci-dessus pour récupérer le produit (1,2g de rendement, 70 %). Après lavage à l'éther, le produit présente un PF de 148°C. (rendement 60 %).

**EXEMPLE 5** : Préparation de sulfamoyl acétates de tert-butyle de formule

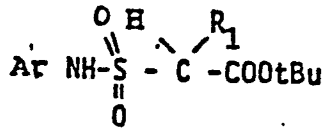

Les composés préparés sont les suivants :

| composé | 7a | 7b | 7c | 8 | 9 | 10 | 11 | 12 | 13 | 14 |
|---|---|---|---|---|---|---|---|---|---|---|
| Ar | 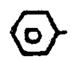 | 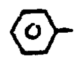 | 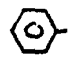 | 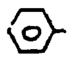 | 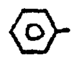 | 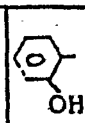 | 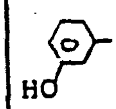 | 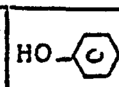 | 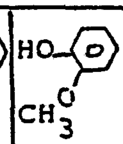 | 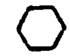 |
| $R_1$ | H | H | H | H | $CH_3$ | H | H | H | H | H |
| R | tBu | Et | Me | Et | tBu | tBu | tBu | tBu | tBu | tBu |

Les composés 7a, 9 à 14 sont synthétisés par oxydation des sulfinamoyl esters correspondants selon le schéma suivant :

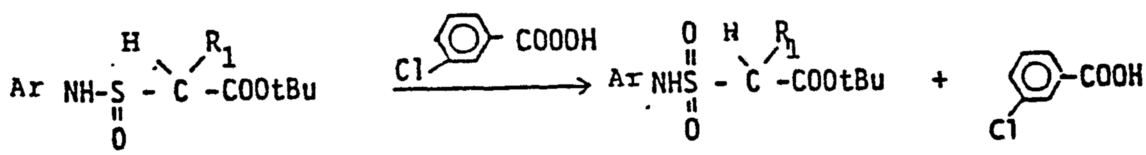

On ajoute goutte à goutte sous agitation magnétique et à 0°C une solution de sulfinamoyl ester dansle chloroforme, à une solution d'acide m-chloroperbenzoïque (50% en excès) dans $CHCl_3$. On laisse tourner la réaction pendant 2 heures à 0°C puis on hydrolyse avec du bicarbonate de sodium (5% dans l'eau). On extrait et on évapore le solvant. L'oxydation est totale. On recristallise dans l'éther (Rdt 75-80%). On rapporte ci-après les points de fusion (F) de ces composés

| composés | 7a | 9 | 10 | 11 | 12 | 13 | 14 |
|---|---|---|---|---|---|---|---|
| F (°C) | 88 | 61 | 105 | 103 | 128 | 122 | 111 |

Pour la synthèse des composés 7b, 7c, et 8, on utilise la méthode de OLIVER J.E. et DE MILO A.B. décrite dans Synthesis tome V,p. 321,1975.

Cette synthèse comprend trois étapes à savoir la préparation

- des sulfonates esters de sodium
- des esters α-chlorosulfoniques
- des sulfamoyle acétates d'alcoyle

selon le schéma réactionnel suivant :

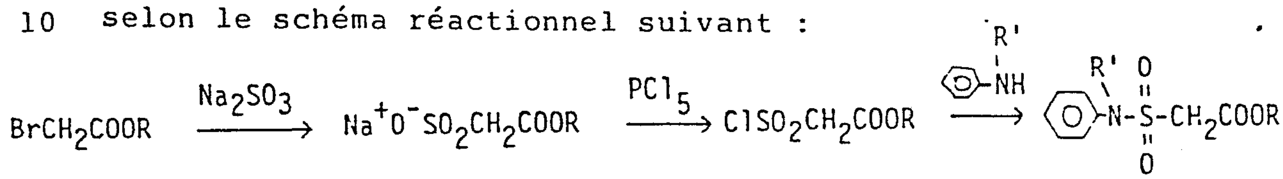


lère étape.

A une solution de sulfite de sodium (0.3 mole) dans 250 ml d'eau on ajoute sous agitation et à 0°C une solution de bromoacétate d'alcoyle (0.3 mole) (R = Me ou Et). On chauffe ensuite à 50°C pendant 30mn jusqu'à dissolution du précipité blanc formé et puis on évapore à sec. Le solide est extrait avec une solution bouillante d'acide acétique : acétate d'éthyle (2 : 1) rapidement filtrée sur célite et refroidie. Les sulfonates de sodium correspondants précipitent et on les filtre. Le rendement est de 70-80%. Les points de fusion sont identiques à ceux rapportés dans la littérature (192° et 160°C respectivement).

2ème étape.

On ajoute lentement 0,06 mole de pentachlorure de phosphore sec sous forme de poudre fine à 0.05 mole de sulfonate ester de sodium préalablement broyé. On chauffe ensuite à 100°C pendant 1 heure, on évapore sous vide et on reprend avec du benzène. Le précipité est éliminé par filtration à travers de la célite. Le filtrat est évaporé. On obtient une huile jaunâtre qui est l'ester α -chlorosulfonique.

3ème étape.

A une solution de 0,03 mole de l'ester α-chlorosulfonique dans le benzène, on ajoute à 0°C, goutte à goutte, une solution d'aniline (0,03 mole) ou de N-méthylaniline (0,03 mole) et de triéthylamine (0,03 mole) dans le benzène. On chauffe légèrement pendant 10 mn, on refroidit et filtre. Le filtrat est lavé avec de l'eau, du bicarbonate de sodium et une solution saturée de $NaCl/H_2O$. On sèche sur sulfate de magnésium, on évapore et on obtient les produits 7b (R' = H,R = Et), 7c (R'=H,R =Me) ou 8 (R' = Me,R = Et). La recristallisation de ces composés a été faite dans l'éther : éther de pétrole (50:50) rendement total de la réaction 50-55% (F : 7c 78°C, 7b 164°C).

L'acide 7d a été obtenu par reflux pendant 3h d'une solution de 7c et de KOH (50% en excès) dans $H_2O/EtOH$ (1:2). Après acidification, on extrait à l'éther et on évapore le mélange réactionnel. L'acide obtenu est recristallisé dans le benzène (F : 109°C), rendement 40%.

Les caractéristiques RMN $^1H$ dans $CDCl_3$ de ces composés confirment les structures attendues.

EXEMPLE 6 : Action in vitro d'inhibiteurs selon l'invention sur la lignification de végétaux.

Les études dont les résultats sont rapportés ci-après ont été effectuées sur de jeunes plants de peuplier et de maïs, variété INRA 400, obtenus en salle conditionnée (température maintenue à 22°C, humidité de 60 à 80% de saturation, éclairement de 10 000 lux , héméropériode de 12 heures).
Les plants de peuplier sont obtenus à partir de boutures de l'année (segments de tiges de 15 cm), placées dans des bacs contenant de la vermiculite et arrosées quotidiennement par une solution nutritive riche en azote présentant la composition suivante :

| Composés | Concentrations g/l |
|---|---|
| $KNO_3$ | 0,303 |
| $KH_2PO_4$ | 0,102 |
| $K_2HPO_4$ | 0,043 |
| NaCl | 0,011 |
| $Ca(NO_3)_2$ | 0,410 |
| $Ca(NO_3)_2.H_2O$ | 0,455 |
| $Ca(NO_3)_2.4H_2O$ | 0,590 |
| $MgSO_4$, $7H_2O$ | 0,184 |
| $NH_4NO_3$ | 0,160 |
| Séquestrène de fer | $0,59x10^{-3}$ |
| $MnSO_4$, $H_2O$ | $1,69 \times 10^{-3}$ |
| $CuSO_4$, $5H_2O$ | $0,25 \times 10^{-3}$ |
| $ZnSO_4$, $7H_2O$ | $0,29 \times 10^{-3}$ |
| $H_3BO_4$ | $1,86 \times 10^{-3}$ |
| $(NH_4)_6O_{24}Mo_7.4H_2O$ | $0,035 \times 10^{-3}$ |

Les échantillonnages ont été effectués à partir de jeunes plants de peuplier âgés de 3 mois et comportant entre 20 et 25 entrenoeuds.

Les fractions tissulaires ont été obtenues par grattages successifs au scalpel selon la méthodologie décrite par GRAND, thèse de 3ème cycle, 1979, Université de Toulouse.

Dans tous les cas, le végétal est stabilisé dans l'azote liquide, puis lyophilisé pendant 48 h et conservé à -20°C dans des flacons colorés et bouchés.

Les semences de maïs sont mises à imbiber pendant 14 heures dans l'eau distillée, à la température ambiante, puis enfouies à 1 cm de profondeur dans la vermiculite répartie dans des bacs en polyéthylène.

Les bacs sont arrosés quotidiennement par une solution nutritive présentant la composition suivante :

| Composés | Concentrations g/l |
|---|---|
| $KNC_3$ | 1,01 |
| $KH_2PO_4$ | 0.27 |
| $MgSO_4 . 7 H_2O$ | 0,96 |
| $Ca(NO_3)_2 . 4 H_2O$ | 2,36 |
| $FeCl_3$ | $0,97 \times 10^{-3}$ |
| EDTA ($Na_2$) | $1,12 \times 10^{-3}$ |
| $H_3BO_3$ | 0,35 |
| $MnSO_4 . H_2O$ | 0,35 |
| $CuSO_4 . 5 H_2O$ | 0,07 |

En vue du dosage des lignines, le matériel végétal est préparé selon la méthode décrite par ALIBERT et BOUDET dans Physiol.vég.17, 75-82, 1979.

50 à 500 mg de végétal lyophilisé, réduit en poudre au broyeur àbilles Dangoumeau (Prolabo) est extrait par 10 ml d'eau distillée (3 fois), soumis à agitation 5 mn, puis à une opération de centrifugation durant 5 mn à 3000 g.

On récupère le culot de centrifugation puis on l'extrait à l'aide de 10 ml de NaCl M, 2% en Triton X 100 (3 fois) et on soumet le mélange à agitation 5 mn. Après une centrifugation de 5 mn, à 3000 g, on récupère le culot qu'on extrait en continu par un mélange alcool-benzène (½ ; v/v) avec un débit de $1ml, mn^{-1}$ (1 l/g de matériel végétal). Le résidu obtenu est rincé avec de l'éthanol absolu et séché sous vide.

La préparation obtenue, appelée "poudre alcool-benzène" correspond à une fraction pariétale enrichie en lignines et polysaccharides (cellulose, hémicelluloses).

Les acides cinnamiques, liés aux lignines sous formes d'esters, sont libérés par hydrolyse des "poudres alcool-benzène" par de la soude 2N pendant 1 heure sous atmosphère d'azote.

Après réacidification à pH2 par de l'acide chlorhydrique 3N et centrifugation, le surnageant contenant les acides cinnamiques est séparé du résidu. Les "poudres alcool-benzène" ainsi hydrolysées sont lavées par de l'eau distillée jusqu'à pH neutre et séchées, sous vide dans un dessiccateur en présence de silica -gel.

Les teneurs en lignines sont estimées par la méthode

gravimétriques de KLASON (Tappi Standard method T12m) modifiée par EFFLAND. Tappi. 60. p 143-144. 1977.

On rapporte dans le tableau 1) suivant les résultats obtenus concernant l'effet mesuré in vitro d'inhibiteurs selon l'invention à une concentration de 2mM vis-à-vis de la CAD de peuplier isolée selon la méthode de SARNI et al,1984,EUROP JOURNAL OF BIOCHEMISTRY,18(1),139, 259-265

On indique également dans ce tableau les résultats obtenus avec des composés portant des substitutions différentes de ceux mis en oeuvre dans l'invention.

Les chiffres indiqués entre parenthèses a côté des formules correspondent aux composés identifiés dans les exemples de préparation 2 et 3.

TABLEAU 1

Composés

| Composés | Inhibition à 2mM % |
|---|---|
| 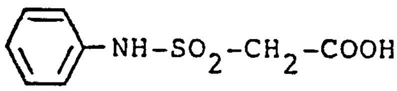 N-(phenyl) sulfamoyle (NPS) | 45 |
| 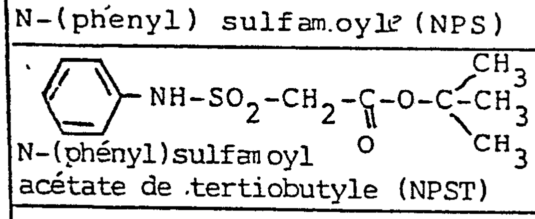 (7a) N-(phényl)sulfamoyl acétate de tertiobutyle (NPST) | 50 |
| 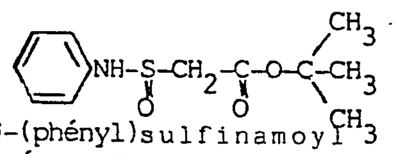 (1) N-(phényl)sulfinamoyl acétate de tertiobutyle (PAS) | 50 |
| 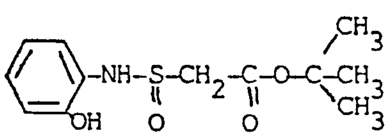 (2) N-(o-hydroxy phényl)sulfinamoyl acétate de tertiobutyle | 90 |
| 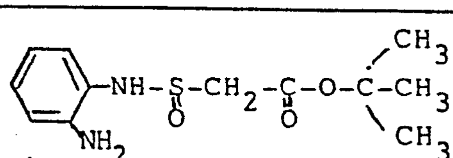 (5) N-(o-Amino phényl)Sulfinamoyl Acétate de tertiobutyle | 80 |

TABLEAU I (suite)

| | |
|---|---|
| 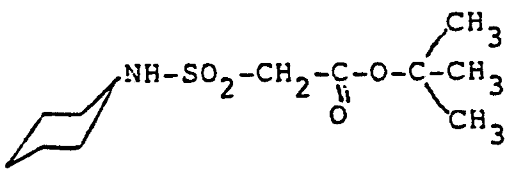 (14) N-(Cyclohexyl)sulfamoyl acétate de tertiobutyle (NCAT) | O |
| 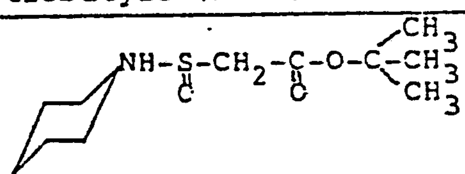 (17) N-(Cyclohexyl)sulfinamoyl acétate de tertiobutyle (NCST) | O |
| 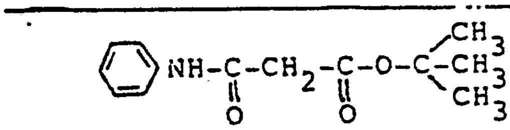 Phényl(carbamoyl) acétate de tertiobutyle (PCAD) | O |
| 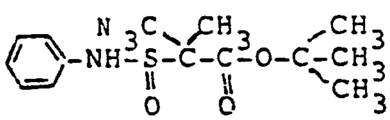 (15) N-(Phényl)sulfinamoyl isobutyrate de tertiobutyle (NPSI) | O |
| 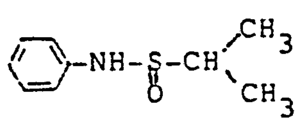 N-(phényl) sulfinamoyl d'isopropyle (NPSP) | O |

Les résultats obtenus montrent que la substitution des groupes de la chaîne latérale par $NH-SO_2$ ou NHSO ne modifie pas de manière significative le taux d'inhibition. Il en est de même en ce qui concerne le remplacement de la fonction acide libre par un groupe tertiobutyle.
En revanche, une perte totale de l'activité inhibitrice est observée lorsque le noyau aromatique est remplacé par une structure cyclohexyle. En outre, la substitution de l'atome de soufre par un atome de carbone s'accompagne d'une perte du caractère inhibiteur de la molécule. Enfin, les molécules possèdant une fonction isopropyle ($-CH-(CH_3)_2$) sur la chaîne latérale (NPSI) ou en bout de chaîne (NPSP) sont également inefficaces.
Ces résultats révèlent donc que le caractère inhibiteur des molécules est intimement lié à la présence d'une part d'un noyau susceptible de constituer un élément de reconnaissance avec le substrat et d'autre part, d'un atome de soufre au niveau de la chaîne latérale. En revanche, le remplacement de la fonction acide, très réactive, par un groupe alcoyle tel qu'un groupe tertiobutyle plus stable ne s'accompagne pas d'une perte d'inhibition.
On constate également qu'une hydroxylation ou une amination ($NH_2$PAS) en position ortho, permet une augmentation très significative de l'inhibition de l'activité CAD (90% d'inhibition à 2mM).
Des études chimiques (cinétique par spectrophotométrie en lumière ultraviolette, RMN et IR) permettent d'émettre des hypothèses sur les mécanismes d'action possible de ces composés sur l'activité alcool cinnamylique déshydrogénase.

L'inhibition résulterait, notamment, de la complexation du zinc par un produit de l'hydrolyse du composé initial. En effet, les produit de l'hydrolyse du composé initial. En effet, les composés NPSI et NPSP non hydrolysables, n'inhibent pas l'activité CAD. On observe, par ailleurs, que les composés substitués en position ortho constituent de meilleurs chélateurs du bromure de zinc et d emeilleurs inhibiteurs de l'activité enzymatique que les composés substitués en position méta ou para.

Ces données suggèrent une inhibition du type "suicide" l 'activation de la fonction réactive s'effectuant par hydrolyse de l'inhibiteur au niveau du site actif de l'enzyme.

L'étude des modalités d'action des composés 2 et 5 savoir respectivement le N-(o-hydroxyphényl)sulfinamoyl acétate de tertiobutyle et le N-(o-aminophényl)sulfamoyl acétate de t-butyle inhibent la CAD de manière faiblement réversible, révélant ainsi une dissociation partielle et lente du complexe enzyme-inhibiteur.

Le composé 2 se caractérise en regard des enzymes testées par une spécificité stricte vis-à-vis de la CAD. Le composé 5, en revanche, inhibe également la CCR.

EXEMPLE 7 : Etude *in vitro* de l'activité inhibitrice vis-à-vis de la CAD de divers composés.

On rapporte dans le tableau 2 suivant les pourcentages d'inhibition de la CAD obtenus en utilisant, à raison de 2 mM, différents composés capables de complexer Zn.

TABLEAU 2

| COMPOSES | INHIBITION à 2mM % |
|---|---|
| 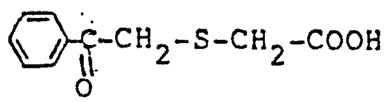<br>Acide oxo-5-phényl-5-thia-3 | 40 |
| 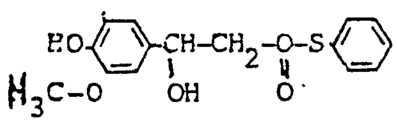<br>(Hydroxy-4-methoxy-3-phényl)-3-Hydroxy-3-propanethiate de 5-phényle (HMHP) | 40 |
| 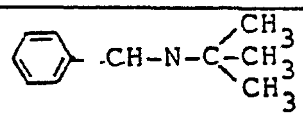<br>N-tert-butyl-methoxy-2 (Iminomethyl) - 4 phénol (BIP) | 50 |
| 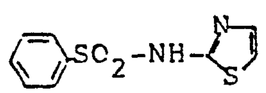<br>N-(Thiazolyl-2) Sulfanilamide (NTS) | 55 |

On constate une activité inhibitrice satisfaisante de ces produits, mais, ils ne sont pas, en tant que tels, hydrosolubles. Les dispositions données dans la description concernant les inhibiteurs de formule I s'appliquent pour ces produits.

EXEMPLE 8 : Action in vivo d'inhibiteurs selon l'invention sur la lignification.

On rapporte ci-après les résultats obtenus avec les composés 2 et 5 désignés respectivement ci-après par OHPAS et $NH_2PAS$.

Pour évaleur l'effet de ces inhibiteurs sur le processus de lignification, on a étudié notamment leur action :

1) sur le taux d'incorporation d'un traceur radioactif correspondant à un précurseur des lignines, à savoir l'acide cinnamique ($^{14}C_3$), dans des fractions de xylème de peuplier isolées à partir de tiges de peuplier (ce qui représente un moyen rapide d'évaluer le flux de synthèse des lignines sur un système simplifié) et dans les parties aériennes du peuplier (ces expériences de plus longue durée conservent un caractère de mesure dynamique, se rapprochant des conditions physiologiques).

2) sur les quantités de lignines formées par des cultures de plusieurs semaines de plants de maïs, réalisées en présence d'inhibiteurs. Dans ce cas, l'effet est observé sur l'accumulation du polymère dans des conditions naturelles.

1)- Etude de l'effet des inhibiteurs sur la synthèse des lignines radioactives à partir d'acide cinnamique ($^{14}C_3$).

a) dans des fractions de xylème isolées à partir de tiges de peuplier.

L'acide cinnamique (149mCi/mmole,CEA) est apporté aux fractions tissulaires isolées à partir de jeunes tiges de peuplier selon la technique de GRAND décrite dans la thèse de 3ème cycle mentionnée ci-dessus.

Les tissus de xylème isolés (300 mg par essai) sont mis en suspension dans des fioles d'erlenmeyer (25ml), bouchées par du coton cardé contenant :

- du tampon Tris/HCl, 0,1M, pH 7,5 (qsp 5ml) maintenant le pH entre 7 et 8,
- du Dextran T40 (25 g/l) utilisé comme agent osmotique, ne constituant pas une source de carbone pour la cellule végétale,
- du β mercaptoéthanol (0,1mM), antioxydant qui empêche un brunissement très rapide des tissus,
- de l'éther monométhylique de l'éthylène glycol (EMMEG) (50 μl) ou des inhibiteurs solubilisés dans ce polyol (50 μl),
- de l'acide cinnamique ($^{14}C_3$) (2,5 μCi).

Les fioles sont palcées à 26°C, sous agitation orbitale (agitateur New Brunswick modèle G 10,100 rpm) et sous un éclairement de 4000 lux pendant 30 h. La radioactivité incorporée par les lignines est alors estimée à partir de "poudre alcool-benzène" obtenu par extraction à l'alcool-benzène des fractions tissulaires lyophilisées et réduites en poudre.

Afin de mesurer l'absorption de l'acide cinnamique par les fractions tissulaires et de corriger d'éventuelles

différences d'absorption selon les essais, une fraction aliquote du milieu d'incubation (50 µl) est prélevée à différents temps et la radioactivité estimée au compteur à scintillation liquide.

La mesure de la radioactivité libérée sous forme de $^{14}CO_2$ après combustion totale des "poudres alcool-benzène" révèle qu'en présence du OHPAS ou du $NH_2$PAS, on observe une baisse de la radioactivité retrouvée dans les lignines. Ainsi, ces inhibiteurs entraînent à la concentration de 1mM, une inhibition de 40 à 70% de la synthèse des lignines radioactives. Ces résultats sont rapportés dans le tableau 3 ci-après :

TABLEAU 3

Effet du OHPAS et du $NH_2$ PAS sur l'absorption de l'acide cinnamique ($14C_3$) et son incorporation dans les lignines par des fractions isolées de xylème.

| Inhibiteurs | Radioactivité absorbée (µCi/essai)a | Radioactivité incorporée dans les lignines (µCi/essai)a | Taux de radio-activité incorporé dans les lignines (%) | Inhibition (%)b |
|---|---|---|---|---|
| Témoin | 1,05 | 0,35 | 33 | 0 |
| OHPAS | | | | |
| 0,2mM | 0,75 | 0,18 | 24 | 17 |
| 1mM | 0,75 | 0,075 | 10 | 70 |
| $NH_2$PAS | | | | |
| 0,2 mM | 0,80 | 0,26 | 32 | 4 |
| 1 mM | 0,80 | 0,16 | 20 | 40 |

-(a) Les résultats sont exprimés par essai, les rapports masse de végétal/radioactivité fournis étant identiques.

- (b) Le pourcentage d'inhibition a été calculé en prenant comme valeur 100 le pourcentage de radioactivité incorporé dans le témoin.

- Les valeurs correspondent à une moyenne de 3 déterminations.

b) dans les tiges de peuplier -

Afin de vérifier chez des tiges de peuplier l'action de l'OHPAS et du $NH_2$PAS, on réalise des incorporations d'acide cinnamique (5 µCi) à des rameaux comportant 12 entrenoeuds selon la technique de la tige sectionnée décrite par BOUDET, dans C.R. Acad. Sci.Paris, p. 1966-1968, 269, 1969.

La radioactivité des lignines est mesurée après 96 heures de métabolisation.

Lorsque la métabolisation est effectuée en présence du OHPAS et du $NH_2$PAS, on observe une diminution de la radioactivité incorporée dans les lignines. Ainsi, l'OHPAS, à la concentration de 160 µM inhibe de 46% l'incorporation de l'acide cinnamique dans le polymère. Bien que les concentrations en inhibiteurs soient plus faibles, l'effet des inhibiteurs apparaît se manifester de façon plus nette pour une métabolisation de plus longue durée.

## 2- Effet des inhibiteurs sur des plants de maïs -

Des plants de maïs ont été traités pendant 10, 20 ou 30 jours par l'OHPAS et le $NH_2$PAS à deux concentrations (80 et 160 µM).

Les inhibiteurs sont ajoutés au milieu nutritif.

Les cultures sur vermiculite (20 plants) sont arrosées quotidiennement par 250 ml de milieu (avec ou sans inhibiteurs). Les semis constituent le temps 0 de la culture, l'addition des inhibiteurs au milieu nutritif

est réalisée dès l'émergence de la partie aérienne (2 à 3 jours). Les différentes caractéristiques des plants sont estimées après 10, 20 ou 30 jours.

al) - <u>Influence du traitement sur la croissance des plants de maïs</u> -

Le traitement par les deux inhibiteurs conduit à des plants de maïs dont les caractéristiques pondérales et les teneurs en eau sont données dans le tableau 4. L'analyse des résultats ne montre aucune différence significative entre les plants traités et les plants témoins. De même, les tailles et l'aspect morphologique des différents lots sont similaires. Toutefois, on constate que le port dressé des maïs est légèrement affecté.

TABLEAU 4

Caractéristiques pondérales des plants de maïs témoins et traités par l'OHPAS ou le $NH_2PAS$. Les valeurs mentionnées correspondent à une moyenne de 20 plants.

| Temps de culture | Poids matériel frais g/plant | | | Poids matériel sec g/plant | | | Teneur en eau g/g de poids sec | | |
|---|---|---|---|---|---|---|---|---|---|
| | Témoin | OHPAS | $NH_2PAS$ | Témoin | OHPAS | $NH_2PAS$ | Témoin | OHPAS | $NH_2PAS$ |
| Individus traités par une concentration de 80 µM en inh. | | | | | | | | | |
| 10 | 1,90 | 2,00 | 1,80 | 0,103 | 0,103 | 0,108 | 17,40 | 18,40 | 15,70 |
| 20 | 3,12 | 3,20 | 3,00 | 0,301 | 0,318 | 0,298 | 9,36 | 9,06 | 9,07 |
| 30 | 4,58 | 4,65 | 4,40 | 0,411 | 0,420 | 0,438 | 9,38 | 10,07 | 9,04 |

INDIVIDUS TRAITES PAR 160 µm en INHIBITEURS

| | | | | | | | | | |
|---|---|---|---|---|---|---|---|---|---|
| 10 | 1,10 | 0,98 | 1,00 | 0,091 | 0,083 | 0,088 | 11,08 | 10,81 | 13,36 |
| 20 | 3,05 | 2,98 | 3,25 | 0,306 | 0,300 | 0,321 | 8,96 | 8,93 | 9,12 |
| 30 | 4,75 | 4,52 | 4,80 | 0,419 | 0,429 | 0,458 | 10,34 | 9,53 | 9,48 |

a2) - <u>Influence du traitement sur les teneurs en lignines</u>

Après hydrolyse par la soude des "poudres alcool-benzène" dans des conditions qui éliminent les acides cinnamiques estérifiés à la paroi, on estime les teneurs en lignines par la méthode de KLASON

Les résultats obtenus montrent que les traitement ces plants par l'OHPAS ou le $NH_2PAS$ conduit à une baisse significative des teneurs en lignines. Ainsi pour une concentration de 80µM et 30 jours de culture, les deux composés entraînent une inhibition de 40 à 50%.

En outre, l'augmentation de la concentration des inhibiteurs de 80 à 160 µM ne s'accompagne pas de modification des taux d'inhibition.

Les données obtenues confirment l'action de l'OHPAS et du $NH_2PAS$ sur le processus de la lignification déjà notée lors des études d'incorporation d'acide cinnamique ($^{14}C_3$) dans les lignines à partir des tiges de peuplier.

a3) - Etude de la spécificité d'action des inhibiteurs *in vivo* -

Les différentes études dont les résultats sont rapportés ci-après ont été réalisées à partir de plants de maïs

âgés de 30 jours et traités par l'OHPAS et le $NH_2PAS$ à la concentration de 80 µM.

α - Influence des inhibiteurs sur le métabolisme primaire -

Afin d'estimer l'action de l'OHPAS et du $NH_2PAS$ sur le métabolisme primaire, les teneurs de trois classes de composés ont été estimées : les protéines solubles, les chlorophyllles et les acides nucléïques.
Les résultats obtenus sont rapportés dans le tableau 5 suivant :

TABLEAU 5

| | Protéines solubles (mg/g PS) | Chlorophylles (mg/g PS) | ARN (mg/g PS) | ADN (mg/g PS) |
|---|---|---|---|---|
| Témoin | 49,40 ± 2 | 7,45 ± 0,4 | 19,54 ± 0,3 | 1,40 ± 0,8 |
| OHPAS | 49,50 ± 1 | 7,80 ± 0,3 | 21,08 ± 0,3 | 1,35 ± 0,6 |
| $NH_2PAS$ | 49,30 ± 2 | 7.69 ± 0,3 | 19,81 ± 0,2 | 1,38 ± 0.7 |

L'examen de ce tableau montre que le traitement des plantules de maïs par les inhibiteurs ne s'accompagne pas de modification des teneurs en ces composés suggérant ainsi que le métabolisme primaire n'est pas, globalement affecté.

β) Influence sur les teneurs en polysaccharides pariétaux -

Le dosage de l'ensemble des polysaccharides pariétaux mais également de la fraction cellulosique n'a révélé aucune différence significative entre les plants témoins et les plants traités.

Ainsi, le traitement de plants de maïs par l'OHPAS et le $NH_2PAS$ n'apparaîssent pas affecter la synthèse de la fraction polysaccharidique de la paroi.

γ) Influence des inhibiteurs sur les teneurs en composés phénoliques solubles -

Le traitement des plants par les inhibiteurs ne modifie pas les teneurs en ces composés comme le montrent les résultats rapportés dans le tableau 6 ci-après. Cependant, on constate une baisse importante (40% avec l'OHPAS) des quantités de flavonoïdes.
Ces résultats suggèrent que l'OHPAS et le $NH_2PAS$ affectent, outre le processus de lignification, la synthèse des flavonoïdes.

TABLEAU 6

| ESSAIS | PHENOLS SIMPLES* | % PERTE | FLAVONOIDES* | % PERTE |
|---|---|---|---|---|
| Témoin | $102 \pm 8$ | 0 | $48 \pm 10$ | 0 |
| Traités par OHPAS | $107 \pm 8$ | 0 | $28 \pm 11$ | 42 |
| Traités par $NH_2PAS$ | $101 \pm 10$ | 0 | $25 \pm 14$ | 48 |

* - Les résultats sont exprimés en mg d'acide gallique par g de matériel et

- les valeurs correspondent à une moyenne de 3 déterminations.

δ) Effets des inhibiteurs sur la teneur en lignines de plants de luzerne de 30 jours :

Le protocole est le même que celui décrit pour les plants de maïs.

On rapporte dans le tableau 7 ci-après les pourcentages d'inhibition obtenus en fonction de la concentration en produit.

| | % d'inhibition | |
|---|---|---|
| Concentration | OH PAS | $NH_2$ PAS |
| 25 μM | 13 | 20 |
| 50 μM | 31 | 17 |

ε) Effet des inhibiteurs à la concentration de 50 M sur le développement de plants de luzerne de 30 jours :

Le protocole est identique à celui utilisé dans les essais sous δ.

| | Témoin | OH PAS | $NH_2$ PAS |
|---|---|---|---|
| Masse de matériel frais g/plante | 2,39 | 2,61 | 2,42 |
| Masse de matériel sec g/plante | 0,29 | 0,33 | 0,31 |

η) Effets des dérivés nitrés sur l'activité CAD "in vitro".

| Concentration finale dans le milieu (mM) | % d'inhibition 0,125 | 0,188 | 0,230 | 0,375 | 0,500 |
|---|---|---|---|---|---|
| nitro PAS | 14 | 28 | 68 | 100 | |
| nitro OH PAS | | | 5 | 41 | 100 |

Les mesures ont été réalisées dans le sens physiologique (aldéhyde alcool), c'est-à-dire en suivant la réduction de l'aldéhyde (oxydation du NADPH mesurée à 340 nm).(Les tests sont plus sensibles et plus proches du milieu "in vivo".

Des résultats analogues ont été obtenus avec les inhibiteurs de formule 1 dans laquelle Ar représente un hétérocycle, en particulier, un hétérocycle azoté pyridyle ou pyrimidinyle.

Les composés dans lesquels Z représente un atome d'halogène ou un groupe alcoxy ont également donné des résultats satisfaisants. De même, l'utilisation de divers groupes esters sur la chaîne latérale permet d'obtenir des inhibiteurs efficaces.

L'ensemble des résultats ci-dessus met en évidence les propriétés avantageuses des inhibiteurs de l'invention.

En particulier, ces inhibiteurs possèdent in vivo une activité nettement supérieure à celle observée in vitro. Une inhibition d'au moins 40%, pouvant dépasser 70%, est obtenue à des concentrations de seulement 80 µM, alors que de tels effets ne sont obtenus qu'à des concentrations de 2mM in vitro.

L'étude de cette famille d'inhibiteurs a également montré qu'ils n'affectaient pas sensiblement les autres constituants biochimiques de la plante, ce qui ne pouvait être prévisible sur la base des résultats in vitro.

L'efficacité de ces inhibiteurs qui se sont révélés de plus dépourvus de toxicité pour les plantes est donc avantageusement mise à profit, selon l'invention, pour moduler en baisse la lignificaiton des végétaux, en vue de leur utilisation dans divers domaines.

L'étude de la digestibilité par les animaux de plantes fourragères telles que fétuques, luzerne hypolignifiées montre une meilleure assimilation du végétal, ce qui permet d'augmenter la productivité.

On a également augmenté la conservation de divers végétaux traités pendant leur culture à l'aide des inhibiteurs de l'invention.

Des productions végétales utilisables pour l'alimentation humaine, qui habituellement deviennent impropres à la consommation deux ou trois semaines après leur récolte, peuvent être ainsi conservées plusieurs mois.

D'une manière générale l'invention fournit donc les moyens de valoriser la biomasse végétale, en réduisant le taux de lignine qui constitue quantitativement dans les végétaux le second polymère après la cellulose.

## REVENDICATIONS

1. Procédé de réduction du taux de lignine de végétaux, caractérisé en ce qu'on traite une espèce végétale donnée à l'aide d'au moins un dérivé de formule I :

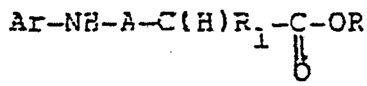

dans laquelle

- Ar représente au moins un cycle aromatique en particulier, un groupe phényle ou un hétérocycle, en particulier un hétérocycle azoté tel qu'un radical pyridyle ou pyrimidinyle, le groupe aromatique ou hétérocyclique étant, le cas échéant, substitué par au moins un radical Z en position ortho, méta ou para, choisi de préférence parmi le groupe -OH, un radical alcoxy renfermant 1 à 4 atomes de carbone, $-NO_2$, $-NH_2$, -NH(alc. ou Ar.), $-N-(alc.)_2$, alc. représentant un groupe alcoyle de 1 à 4 atomes de carbone et Ar représentant un radical aromatique, tel qu'un groupe phényle,

- A représente un groupe 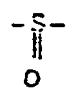 ou 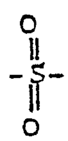

- $R_1$ représente un radical alcoyle, en particulier, méthyle ou éthyle, ou un atome d'hydrogène, et

- R représente un radical alcoyle linéaire ou ramifié, de préférence de 1 à 4 atomes de carbone, ou un atome d'hydrogène.

2.- Procédé selon la revendication 1, caractérisé en ce qu'on met en oeuvre au moins un dérivé de formule II :

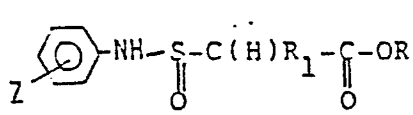

dans laquelle Z̲, $R_1$ et R̲ présentent les significations données ci-dessus.

3.- Procédé selon la revendication 2, caractérisé en ce qu'on met en oeuvre au moins un dérivé de formule IIA ou IIB.

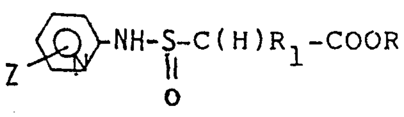 (IIA) ou 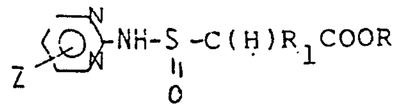 (IIB)

dans lesquelles les substituants Z̲, $R_1$ et R̲ présentent les significations indiquées en rapport avec la formule II.

4.- Procédé selon la revendication 1, caractérisé en ce qu'on met en oeuvre au moins un dérivé de formule III

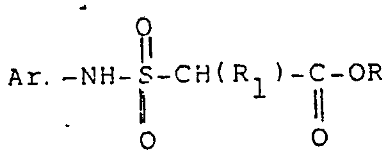 (III)

dans laquelle Ar, $R_1$ et R̲ présentent les significations données en rapport avec la formule I.

5.- Procédé selon la revendication 4, caractérisé en ce qu'on met en oeuvre au moins un dérivé de formule IIIA ou IIIB :

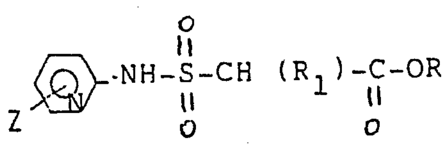 (IIIA)

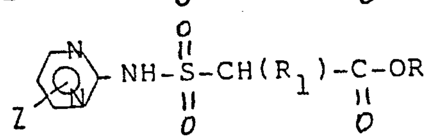 (IIIB)

dans laquelle les substituants Z, $R_1$ et R présentent les significations indiquées en rapport avec la formule III.

6.- Procédé selon l'une quelconque des revendications 1 à 5, caractérisé en ce que le substituant Z représente un groupe en position ortho.

7.- Procédé selon la revendication 6, caractérisé en ce que Z représente un groupe -OH ou $-NH_2$.

8.- Procédé selon l'une quelconque des revendications 1 à 5, caractérisé en ce que les dérivés mis en oeuvre renferment un substituant Z représentant un groupe $-NO_2$, en particulier en position para et éventuellement un autre groupe de substitution Z, représentant notamment un groupe -OH en position ortho.

9.- Procédé selon la revendication 1, caractérisé en ce qu'on met en oeuvre un composé choisi parmi le N-(phényl) sulfamoyle, le N-(phényl)sulfamoyl acétate de tertiobutyle, le N-(phényl)sulfinamoyl acétate de tertiobutyle, le N-(hydroxy phényl)sulfinamoyl acétate de tertiobutyle, le N-(o-Amino phényl)Sulfinamoyl Acétate de tertiobutyle, le N-(p-nitrophényl)sulfinamoyl acétate de tertiobutyle et le N(p-nitro,o-hydroxyphényl)sulfinamoyl acétate de tertiobutyle.

10.- Procédé selon l'une quelconque des revendications 1 à 9, caractérisé en ce qu'on met en oeuvre le dérivé à raison d'au moins 50µM.

11.- Composition pour la réduction du taux de lignine dans les végétaux caractérisée en ce qu'elle comprend une quantité efficace d'au moins un dérivé selon l'une quelconque des revendications 1 à 9, le cas échéant en combinaison avec des agents nutritifs ou de traitement des végétaux.

12.- Composition selon la revendication 11 sous forme de solution aqueuse.

13 - Application du procédé selon l'une quelconque des revendications 1 à 9 au traitement des plantes fourragères et des productions végétales.

Office européen des brevets

# RAPPORT DE RECHERCHE EUROPEENNE

0155872
Numéro de la demande

EP 85 40 0323

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | SYNTHESIS, no. 4, avril 1982, pages 281-283, Georg Thieme Verlag, Stuttgart, DE; A. DE BLIC et al.: "A convenient and facile synthesis of beta-aminosulfinyl- and beta-aminosulfonylalkanoic esters from metallated esters and N-sulfinylamines" * Page 281, colonne de gauche, lignes 1,2 de l'article * | 1-13 | A 01 N 41/06<br>A 01 N 43/40<br>A 01 N 43/54 |
| | ----- | | |
| | | | DOMAINES TECHNIQUES RECHERCHES (Int. Cl.4) |
| | | | A 01 N |

Le present rapport de recherche a été établi pour toutes les revendications

| Lieu de la recherche | Date d'achèvement de la recherche | Examinateur |
|---|---|---|
| LA HAYE | 11-06-1985 | DECORTE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82